(19) Europäisches Patentamt / European Patent Office / Office européen des brevets

(11) **EP 1 798 560 A1**

(12) **DEMANDE DE BREVET EUROPEEN**

(43) Date de publication:
   **20.06.2007 Bulletin 2007/25**

(51) Int Cl.:
   ***G01P 5/02*** *(2006.01)*    ***G01F 1/28*** *(2006.01)*

(21) Numéro de dépôt: **06291920.4**

(22) Date de dépôt: **12.12.2006**

(84) Etats contractants désignés:
   **AT BE BG CH CY CZ DE DK EE ES FI FR GB GR
   HU IE IS IT LI LT LU LV MC NL PL PT RO SE SI
   SK TR**
   Etats d'extension désignés:
   **AL BA HR MK YU**

(30) Priorité: **13.12.2005  FR 0512619**

(71) Demandeur: **Société des Eaux de Marseille
   13006 Marseille (FR)**

(72) Inventeur: **Jalabert, Thierry
   13170 Les Pennes Mirabeau (FR)**

(74) Mandataire: **Domange, Maxime
   Cabinet Beau de Lomenie,
   232, avenue du Prado
   13295 Marseille Cedex 08 (FR)**

(54) **Dispositif destiné à la mesure de la vitesse d'un fluide dans un ecoulement**

(57)    L'invention concerne un dispositif [100] destiné à la mesure de la vitesse d'un fluide [300] dans un écoulement, comprenant un support rigide [101], un capteur de force en compression [102] étanche rigidement fixé à une extrémité dite d'immersion [101'] dudit support rigide [101] et apte à capter une force dans au moins une direction de compression [D], à transformer cette force en signaux électriques dépendants de cette force et à envoyer ces signaux électriques vers des moyens de traitement de données [106] pour déduire la vitesse du fluide [300] dans la direction de compression [D] à partir desdits signaux électriques, un objet dit d'impact [104] fixé rigidement sur le capteur de force en compression [102] de telle manière que la force captée par le capteur de force en compression [102] est la force exercée sur l'objet d'impact [104] dans la direction de compression [D], ledit objet d'impact [104] s'étendant sur une surface fixe par rapport à la direction de compression [D] du capteur de force en compression [102].

FIG.1

EP 1 798 560 A1

**Description**

Arrière-plan de l'invention

La présente invention se rapporte au domaine général des dispositifs de mesure de la vitesse d'un fluide dans un écoulement faiblement turbulent.

De nombreux types de dispositifs destinés à une telle mesure sont connus. En particulier, on connaît les dispositifs basés sur le mouvement d'une pièce mécanique, tels les moulinets ou les ressorts associés à une pièce coulissante, ceux basés sur l'utilisation d'une propriété électromagnétique du fluide considéré, tels les dispositifs électromagnétiques, ceux basés sur l'utilisation d'un laser ou encore sur l'utilisation d'ondes ultrasonores.

Ces dispositifs présentent l'inconvénient d'être coûteux à fabriquer et souvent relativement complexes à mettre en oeuvre. Ceux qui ont des pièces en mouvement subissent des phénomènes d'usure et de corrosion importants et parfois des phénomènes d'encrassage nuisant à leur fiabilité.

Le document FR 2 565 351 décrit un dispositif particulièrement simple pour mesurer la vitesse d'un fluide dans un écoulement basé sur l'utilisation d'une jauge de contrainte placée sur la surface d'un support souple. Le support souple, plongé dans un fluide en mouvement se déforme provoquant un changement de résistance de la jauge de contrainte. En reliant cette jauge à un galvanomètre et en faisant passer un courant dans la jauge, il est alors possible, après un étalonnage, de connaître la vitesse du fluide.

En outre, en munissant le support souple de plusieurs jauges disposées en périphérie, il est possible d'obtenir la direction de l'écoulement.

Avec ce type de dispositif, il est constaté que la mesure est peu fiable car, le support se déformant, la surface qu'il offre à l'écoulement varie. Le coefficient de traînée du support n'est alors pas constant sur une gamme de vitesse. Il est difficile voire impossible de modéliser la relation entre le changement de résistance de la jauge de contrainte et la vitesse du fluide. Par conséquent, un étalonnage devra être réalisé pour chaque fluide différent dans lequel un tel dispositif sera utilisé et ce, sur toute la gamme de vitesses envisageable.

En outre, la mesure réalisée dépend de l'immersion du support. En effet, si celui-ci n'est que partiellement immergé, il donnera une mesure différente par rapport à la mesure obtenue avec un support entièrement immergé. Cela nuit à la fiabilité des mesures.

Enfin, on remarque que des déformations irréversibles du support dues aux limites de plasticité du matériau de fabrication peuvent résulter en des mesures erronées.

Objet et résumé de l'invention

La présente invention a donc pour but principal de pallier de tels inconvénients en proposant un dispositif comprenant un support rigide, un capteur de force en compression étanche rigidement fixé à une extrémité dite d'immersion dudit support rigide et apte à capter une force dans au moins une direction de compression, à transformer cette force en signaux électriques dépendants de cette force et à envoyer ces signaux électriques vers des moyens de traitement de données, un objet dit d'impact fixé rigidement sur le capteur de force en compression de telle manière que la force captée par le capteur de force en compression est la force exercée sur l'objet d'impact dans la direction de compression, ledit objet d'impact s'étendant sur une surface fixe par rapport à la direction de compression du capteur de force en compression, des moyens de traitement de données destinés à recevoir les signaux électriques et à en déduire la vitesse du fluide dans la direction de compression à partir desdits signaux électriques.

L'extrémité d'immersion du support rigide est destinée à être immergée de manière telle que la direction de déplacement du fluide soit sensiblement parallèle à ladite direction de compression. Avantageusement, l'objet d'impact est placé devant le capteur de force en compression dans le sens d'écoulement lors de l'immersion. Afin d'être dans des situations de faible turbulence, on note qu'il est nécessaire que la dimension de l'objet d'impact soit faible par rapport à la section de l'écoulement. On entend par « capteur de force en compression » tout capteur numérique ou analogique comprenant des jauges de contrainte internes permettant de mesurer les forces appliquées sur le capteur sans que celui-ci ne subisse de déformation macroscopique. De tels capteurs sont bien connus de l'homme du métier et sont disponibles dans le commerce. Alors, avec un tel dispositif, il est très simple d'obtenir une mesure de la vitesse fiable.

En effet, le coefficient de traînée de l'objet d'impact est constant et donc connu quelle que soit la vitesse du fluide pour la grande majorité des applications d'écoulement pas ou peu turbulent où un tel dispositif est destiné à être utilisé.

On peut alors aisément modéliser les modifications d'une fonction de transfert entre la force captée par le capteur de force en compression et la vitesse du fluide en fonction de divers paramètres sans avoir à étalonner préalablement le dispositif pour chaque modification de chaque paramètre.

En outre, les capteurs de force pouvant être implémenté dans un dispositif selon l'invention sont, d'une manière générale, moins chers que la plupart des éléments utilisés dans les autres types de dispositifs de mesure de vitesse de fluide. De plus, le montage selon l'invention est un montage où les différents éléments sont montés fixes entre eux. Un tel montage est donc, à la fois, peu coûteux et robuste. Cela permet de réaliser un dispositif de mesure de fluide efficace et résistant à un prix tout à fait intéressant.

Selon une caractéristique particulière de l'invention, l'objet d'impact est un élément plan fixé perpendiculairement à la direction de compression.

Un tel objet d'impact présente l'avantage de permettre de repérer aisément la direction de compression lors de l'immersion. L'objet d'impact apparaît, en vue de dessus pour un opérateur, comme une ligne à placer perpendiculairement à la direction d'écoulement.

Selon une caractéristique particulière de l'invention, l'objet d'impact est un disque ou une sphère ou une portion de sphère.

Une surface de forme circulaire permet que la force exercée sur cette surface soit la plus isotrope possible. En outre, une sphère ou une portion de sphère présente un coefficient de traînée faible, ce qui peut être avantageux pour les mesures dans des écoulements à vitesse élevée.

Avantageusement, le dispositif est apte à être équipé d'objets d'impact démontables de tailles variées et/ou de formes variées correspondant à différentes plages optimales de mesures du dispositif.

Une telle caractéristique permet d'adapter le dispositif en fonction de la vitesse du fluide dans l'écoulement.

Selon une autre caractéristique particulière de l'invention, le support rigide étant longitudinal et perpendiculaire à la direction de compression, les moyens de traitement de données sont fixés à l'autre extrémité du support rigide.

Une telle caractéristique permet d'obtenir un dispositif compact, aisé à transporter et à faire fonctionner puisqu'il peut être rendu totalement autonome à l'aide d'une batterie par exemple. Les moyens de traitement peuvent ainsi être maintenu hors eau. Le capteur de force et les moyens de traitement de données sont alors avantageusement reliés par au moins un câble électrique étanche, par exemple le long du support longitudinal, servant à véhiculer les signaux électriques.

Selon une autre caractéristique particulière de l'invention, les moyens de traitement de données incluent des moyens pour calculer une moyenne des signaux reçus sur des périodes de durée prédéterminée.

Cette caractéristique présente l'avantage de limiter l'observation de turbulences dans l'écoulement dès que la période de calcul de la moyenne est supérieure à la durée moyenne des fluctuations turbulentes de la vitesse de l'écoulement.

Selon une caractéristique particulièrement avantageuse, les moyens de traitement de données incluent des moyens de paramétrage du dispositif.

Il est ainsi possible d'étalonner le dispositif dans des applications particulières où, par exemple, la masse volumique du fluide est particulière etc.

Dans une mise en oeuvre particulière, les moyens de traitement de données incluent des moyens pour prendre en compte la température ambiante d'utilisation du dispositif.

Comme la température est susceptible de faire varier, entre autre, la masse volumique du fluide et, le cas échéant, le comportement du capteur de force en compression, il peut s'avérer utile que les moyens de traitement de données incluent des moyens pour prendre en compte la température du milieu d'utilisation. Ils peuvent notamment être reliés à un capteur de température dont ils peuvent traiter les signaux et en tenir compte.

Dans une mise en oeuvre particulière, le support rigide est monté mobile en rotation sur un axe rigide destiné à être sensiblement perpendiculaire à la surface de l'écoulement lors de l'utilisation et en ce qu'il comporte des moyens pour orienter ledit support rigide dans le sens du courant.

Avec une telle mise en oeuvre, il est rendu possible de mesurer une vitesse dans un écoulement dont on ne connaît ni la direction ni le sens. Des pales peuvent par exemple être placées sur le support rigide afin que les forces exercées par le fluide sur ces pales orientent le support quand celui-ci est immergé.

L'invention concerne aussi un procédé de mesure de la vitesse d'un fluide dans un écoulement incluant les étapes d'immerger un capteur de force en compression étanche rigidement fixé à une extrémité dite d'immersion d'un support rigide, ledit capteur étant apte à capter une force dans au moins une direction de compression, un objet dit d'impact étant placé rigidement sur le capteur de force en compression de telle manière que la force captée par le capteur de force en compression est la force exercée sur l'objet d'impact dans la direction de compression, ledit objet d'impact s'étendant sur une surface fixe par rapport à la direction de compression du capteur de force en compression, l'immersion étant telle que la direction de déplacement du fluide soit sensiblement parallèle à ladite direction de compression, de transformer, au sein du capteur de force en compression, cette force en signaux électriques dépendants de cette force, d'envoyer ces signaux électriques vers des moyens de traitement de données, de déduire, au sein des moyens de traitement de données, la vitesse du fluide dans la direction de compression, d'enregistrer ou afficher ladite vitesse.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est un schéma d'un dispositif selon l'invention ;
- la figure 2 est un schéma en perspective éclatée du montage selon l'invention d'un objet d'impact sur un capteur de force en compression;
- la figure 3 montre schématiquement l'utilisation d'un dispositif selon l'invention pour mesurer la vitesse d'un fluide dans un canal ;
- la figure 4 est une courbe de correspondance de la force de traînée captée par le capteur de force en compression dans un dispositif selon l'invention et de la vitesse mesurée avec un vélocimètre laser ;

- la figure 5 est un diagramme de comparaison entre la vitesse mesurée par un vélocimètre laser et la vitesse mesurée par un dispositif selon l'invention ;

- la figure 6 est un diagramme des écarts absolus relatifs entre les mesures de vitesse avec un vélocimètre laser et le dispositif selon l'invention en pourcentage de la vitesse.

Description détaillée d'un mode de réalisation

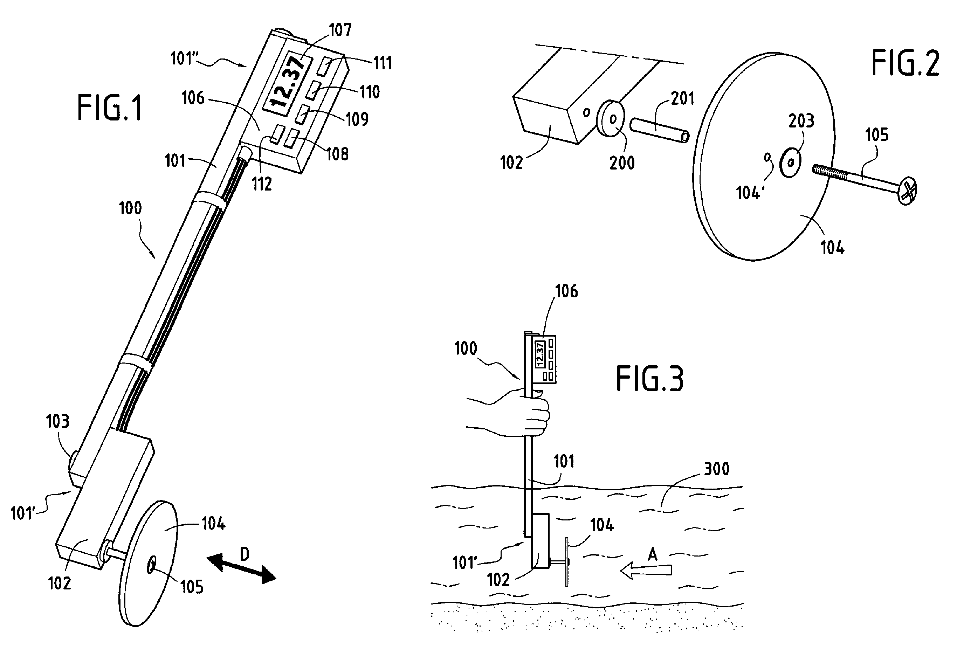

La figure 1 représente un dispositif 100 selon l'invention. Il comporte un support rigide 101 longitudinal. A une extrémité dite d'impact 101' du support rigide 101, un capteur de force en compression 102 étanche (selon la norme IP68 par exemple) est fixé. Par exemple, un capteur de force en compression SCAIME de type AK6 convient à un dispositif selon l'invention. Il est étanche et apte à mesurer des forces comprises entre 0 et 60 Newtons avec une erreur combinée de 0,017 pour cent. Ce capteur en acier inoxydable est conçu pour fonctionner en milieu industriel dans des environnements humides et corrosifs.

Un tel capteur de compression est bien connu de l'homme du métier et comprend des jauges internes. Le capteur de compression ne subit néanmoins pas de déformation macroscopique lors d'application de force de compression.

Le capteur de force 102 est fixé rigidement, par exemple à l'aide d'une vis 103 traversant le support rigide 101 et venant se loger dans un pas de vis prévu à cet effet sur le capteur de force 102. Le capteur de force 102 est apte à capter une force dans au moins une direction de compression D. Le capteur de force est fixé de telle manière que la dimension principale du support longitudinal s'étend perpendiculairement à la direction de compression.

Le capteur de force 102 transforme la force captée en signaux électriques dépendants de cette force et est apte à envoyer ces signaux électriques vers des moyens de traitement de données 106. Le capteur 102 peut présenter une ou des sorties analogiques et/ou une ou des sorties numériques. Ces sorties sont reliées à des moyens de traitement de données soit directement soit par l'intermédiaire d'une interface, par exemple de type RS232.

Un courant i, par exemple compris entre 4 et 20 mA, ou une différence de potentiel, par exemple comprise entre 0 et 10V, proportionnels à la force captée peuvent ainsi être disponibles sur une sortie analogique du capteur.

Lorsque le capteur de force 102 possède une sortie numérique, il peut, par exemple, fournir en sortie un signal électrique représentatif d'une valeur numérique discrète de la force captée comprise entre -20000 et +20000 pour une pleine échelle de 60 Newtons. Une unité correspond, dans ce cas, à 0,003 Newtons.

Le capteur de force en compression est avantageusement choisi de telle manière que la mesure de force soit fiable pour des températures comprises entre -40 et +40°C. Seule la densité du fluide, variant avec la température, pourra donc fausser la mesure. On sait cependant que cela est un inconvénient commun à tous les types de mesure de vitesse de fluide.

Le dispositif 100 inclut en outre un objet dit d'impact 104. Dans l'exemple proposé sur la figure 1, l'objet d'impact 104 est un disque s'étendant dans un plan perpendiculaire à la direction de compression D du capteur de force 102. Par exemple, il présente un diamètre de 12 cm et une épaisseur de 3 mm. Ce disque 104 est fixé rigidement au capteur de force 102.

Un tel disque 104 est susceptible de subir des efforts de 0 à 6 DaN lorsqu'il est immergé dans de l'eau circulant à des vitesses comprises entre 0 et 2,2 m/s, communément rencontrées. Selon les principes de l'invention, on peut équiper un dispositif selon l'invention avec des disques de diamètres différents. Cela permet de déplacer la plage de mesure en fonction de la vitesse à mesurer et de la précision correspondante.

Le dispositif 100 décrit sur la figure 1 est portable et peut être utilisé pour des jaugeages. Cependant un même principe de dispositif peut être installé fixe, par exemple dans une canalisation fermée avec un renvoi de l'affichage sur un écran situé en un autre lieu. Le dispositif selon l'invention peut être installé dans un écoulement en charge ou à surface libre.

L'alimentation électrique d'un dispositif selon l'invention peut, par exemple, être une batterie de 12V ou une alimentation secteur 220V.

La figure 2 montre le montage détaillé du disque 104 sur le capteur 102 à l'aide d'une vis 105 passant dans un orifice central 104' du disque 104. Un répartiteur d'effort 200 et un transmetteur d'effort 201 sont avantageusement placés entre le capteur de force en compression 102 et le disque 104. Ce répartiteur 200 et ce transmetteur 201 sont contraints entre le disque 104 et le capteur de force en compression 102 lorsque le disque 104 est fixé au capteur 102 avec la vis 105 dont la tête repose avantageusement sur une rondelle 203 placée au niveau de l'orifice central 104' du disque 104.

Avec un montage tel que représenté sur la figure 3, une force exercée perpendiculairement sur le disque 104 est directement transmise au capteur de force en compression 102.

La figure 3 montre schématiquement l'utilisation d'un dispositif 100 selon l'invention pour mesurer la vitesse d'un fluide 300 se déplaçant dans un sens et une direction d'écoulement A connus. L'extrémité d'impact 101' est immergée dans le fluide 300 de manière telle que le disque 104 s'étende perpendiculairement à la direction de déplacement du fluide 300 et devant le capteur de force en compression 102 dans le sens d'écoulement du fluide. Dans une telle configuration, la direction A est alors parallèle à la direction de compression D du capteur de force 102.

La force captée par le capteur 102 est alors égale à celle exercée par le fluide 300 en déplacement sur le disque 104.

Les moyens de traitement de données 106 reçoivent les signaux électriques analogiques ou numériques fonction de cette force captée en provenance du capteur de force 102. Ils déduisent alors de ces signaux électriques la vitesse du fluide en utilisant une loi de correspondance entre la vitesse et la force captée afin d'afficher cette vitesse du fluide sur un afficheur 107.

A ce sujet, on sait qu'un objet 104 placé dans un fluide en déplacement subit un vecteur force dans le sens de l'écoulement proportionnel au carré de la vitesse, au coefficient de traînée Cx et à la masse volumique du liquide selon la formule découlant du théorème de Kutta Jukowski :

$$F=1/2.Cx.\rho.S.V^2$$

F étant la force en Newton, Cx le coefficient de traînée, S la section maximale perpendiculaire à l'écoulement en $m^2$, p la masse volumique du fluide en $kg/m^3$ et V la vitesse du fluide en m/s.

Le domaine de fonctionnement d'un dispositif selon l'invention correspond à des écoulements pour lesquels le coefficient de traînée présente des variations faibles en fonction du nombre de Reynolds caractéristique de l'écoulement considéré. On parle alors d'écoulement peu turbulent. Pratiquement il est nécessaire que la dimension de l'objet d'impact soit au moins quatre fois inférieure à la section de l'écoulement.

Ainsi, par exemple, pour une sphère utilisée en objet d'impact, le coefficient de traînée est stable pour des nombres de Reynolds compris entre 100 et 10000 et se stabilise aux environs de 0,43.

Dans le cas de l'utilisation d'une plaque pleine en objet d'impact, ainsi que représenté sur les figures 1 et 2, le coefficient de traînée se stabilise à une valeur de 2,1 pour des écoulements correspondants à des nombres de Reynolds compris entre 100 et 10000.

Ainsi, dans de tels domaines de fonctionnement, seule la masse volumique du fluide est de nature à modifier la fonction de transfert entre force captée et vitesse. Or, pour un fluide non compressible, la masse volumique est sensiblement constante. Ainsi, la force captée par le capteur de force 102, quand le dispositif 100 est placé dans un écoulement, est alors uniquement proportionnelle au carré de la vitesse du fluide.

En théorie, on sait alors qu'avec un disque de 12 cm de diamètre la fonction de transfert entre la vitesse et la force de traînée est, avec l'eau, $F=11,308 V^2$ avec F en Newton et V en m/s.

En utilisant un capteur de force numérique tel que présenté auparavant et donnant des valeurs comprises entre -20000 et +20000 pour une pleine échelle de 60 Newtons, on réalise alors une mesure du zéro en immergeant l'extrémité d'impact 101' du dispositif dans l'eau. Celui-ci est, par exemple, de -8535. La force maximum mesurable correspond à cette valeur de zéro + 20000 unités.

On obtient alors une courbe de correspondance théorique $y=3769,4x^2-8535$. Cette courbe de correspondance peut être programmée au sein des moyens de traitement de données.

Avantageusement, lorsqu'un capteur de force à sortie analogique est utilisé, les moyens de traitement de données incluent un convertisseur analogique numérique pour convertir les signaux électriques analogiques en signaux numériques discrets pouvant, par exemple, prendre des valeurs comprises entre -20000 et +20000 pour une pleine échelle de 60 Newtons.

Concrètement, un étalonnage du dispositif est avantageusement réalisé. Cet étalonnage permet de programmer les moyens de traitement de données 106 avec une courbe expérimentale de correspondance de telle manière que soit déduite une vitesse du fluide exacte.

Un tel étalonnage est, par exemple, réalisé dans un canal expérimental utilisant de l'eau et mène à la détermination d'une courbe de correspondance force/vitesse expérimentale.

Le canal expérimental est équipé d'un moyen de détermination de la vitesse du fluide indépendant du dispositif, par exemple un vélocimètre laser à effet doppler.

La mesure par vélocimétrie laser est réalisée en amont dans la ligne d'eau de l'objet d'impact 104. Afin d'éviter l'influence de l'objet d'impact 104 sur la mesure par vélocimétrie laser, celle-ci est avantageusement réalisée à une distance d'au moins quatre fois le diamètre de l'objet d'impact, soit 480 mm dans l'exemple proposé. On sait que les mesures de vélocimétrie laser sont très bien corrélées avec le débit du canal expérimental qui est par définition connu.

Pour une hauteur d'eau dans le canal expérimental de 300 mm, le dispositif selon l'invention peut être positionné de manière à ce que son centre soit à 120 mm du fond du canal. On s'affranchit dans ce cas des principaux effets de bord.

A ce stade de l'étalonnage, à la sortie du capteur numérique des valeurs numériques comprises entre -20000 et +20000 sont disponibles. Elles sont affichées sur l'afficheur 107. Ces valeurs sont alors mises en correspondance avec les vitesses telles que mesurées par le vélocimètre laser, et ce pour plusieurs régimes de fonctionnement du canal, différentes hauteurs d'eau et différentes positions du dispositif dans le canal.

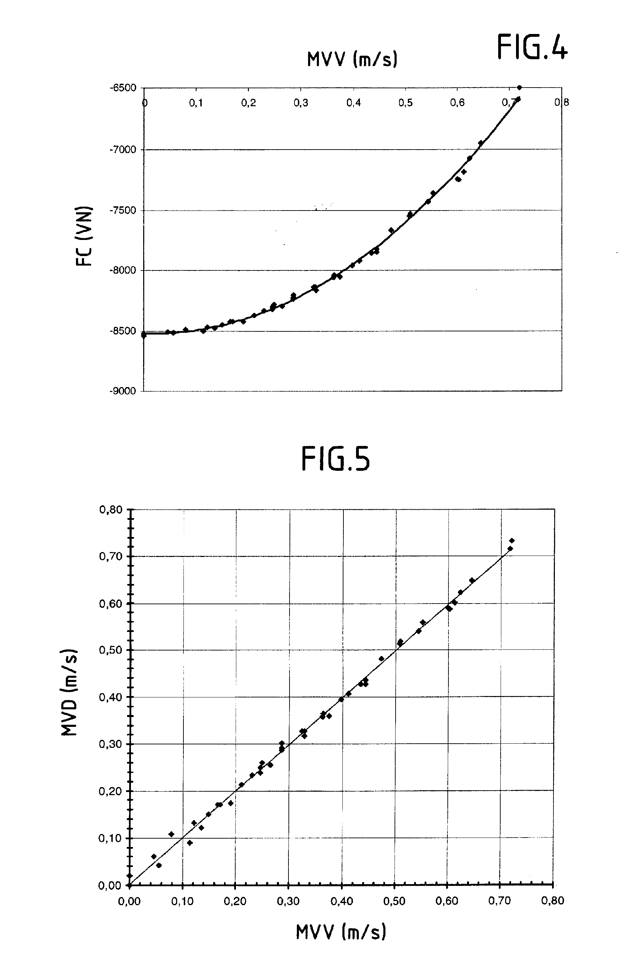

La figure 4 représente la courbe de correspondance ainsi obtenue de la force captée FC sur l'échelle des valeurs numériques VN en fonction de la vitesse mesurée avec le vélocimètre laser MVV. Dans l'exemple proposé, l'équation du second ordre qui lui correspond est $y=3928,6X^2-140,19x-8516,6$.

On remarque que, comme la courbe théorique est très proche de cette courbe expérimentale, le dispositif peut donc être programmé en tenant uniquement compte de la valeur du zéro sur la courbe théorique $y=3769,4x^2+B$.

Selon une autre mise en oeuvre, un dispositif selon l'invention peut être très simplement étalonné en réalisant la mesure d'un zéro et la mesure d'une vitesse connue, si possible sur la plage haute des vitesses pour trouver les paramètres de la courbe théorique $y=Ax^2+B$.

On peut aussi programmer une table de correspondance en utilisant 16 couples de valeurs expérimentales obtenues à partir de la comparaison avec le vélocimètre laser. Entre ces couples de valeurs, la valeur affichée fait alors l'objet d'une corrélation linéaire. Le tableau suivant peut par exemple être ainsi utilisé :

| Affichage | Valeur Numérique |
|---|---|
| 0 | -10000 |
| 0 | -8535 |
| 0,05 | -8510 |
| 0,1 | -8491 |
| 0,15 | -8449 |
| 0,2 | -8387 |
| 0,3 | -8205 |
| 0,4 | -7944 |
| 0,5 | -7605 |
| 0,6 | -7186 |
| 0,7 | -6690 |
| 0,8 | -6114 |
| 1 | -4728 |
| 1,3 | -2060 |
| 1,7 | 2599 |
| 2,2 | 10189 |

Dans tous les cas, quel que soit le type de programmation choisi, les moyens de traitement de données incluent ainsi un calculateur dans lequel est programmée une fonction de transfert entre les valeurs numériques représentées par les signaux électriques et représentatives de la force captée et la vitesse de l'écoulement. On note en outre que, placé dans une canalisation en charge, un paramétrage préalable du dispositif lui permettra de fournir une valeur de débit.

En appliquant la fonction de transfert aux valeurs numériques comprises entre -20000 et +20000 disponibles en sortie du capteur, on obtient la vitesse du fluide alors affichée sur l'afficheur 107 du dispositif 100. Avantageusement, les moyens de traitement de données sont programmés pour que l'afficheur affiche la vitesse en m/s.

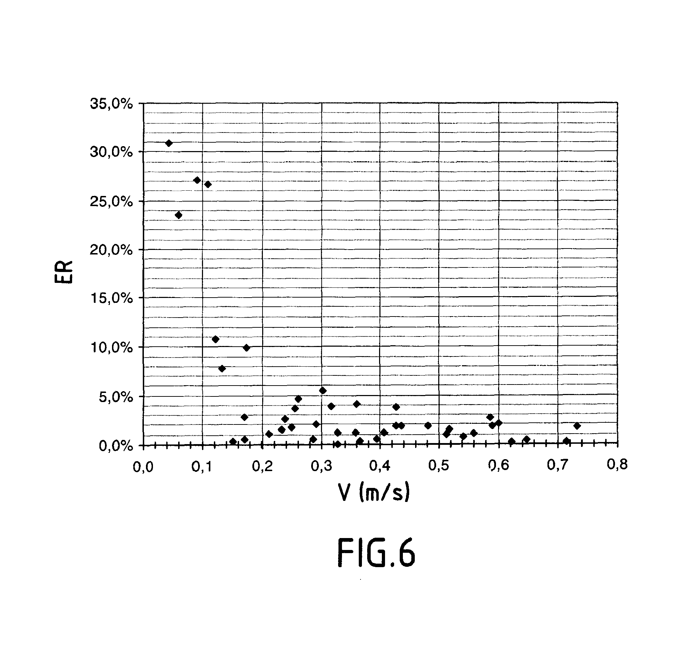

La figure 5 donne une comparaison entre la vitesse ainsi affichée sur le dispositif MVD et la vitesse mesurée avec le vélocimètre laser MW. On constate que la corrélation est satisfaisante.

La figure 6 représente les écarts ER relatifs entre la vitesse mesurée au vélocimètre laser et celle mesurée avec le dispositif en pourcentage de la vitesse en fonction de la vitesse V. On constate qu'hormis pour les très faibles vitesses, les écarts sont très faibles, inférieurs à 6% pour des vitesses supérieures à 0,2 m/s, et à 2% pour des vitesses supérieures à 0,45 m/s montrant que le dispositif selon l'invention est particulièrement efficace malgré sa simplicité.

Un étalonnage ainsi réalisé et sa programmation sont valables pour un fluide ayant la masse volumique de l'eau. Dans le cas d'une utilisation du dispositif avec un autre fluide supposé non compressible, la masse volumique est de nature à modifier la fonction de transfert entre force et vitesse. Étant donné que les autres paramètres de la relation entre force captée et vitesse restent inchangés, le dispositif selon l'invention permet de tenir compte très facilement par un simple facteur de multiplication de la différence de masse volumique du fluide utilisé avec celle de l'eau pour connaître la fonction de transfert propre à ce fluide. La prise en compte des modifications de masse volumique du fluide est utile en particulier lors de modifications de température.

Ainsi, on munit avantageusement les moyens de traitement de données 106 de moyens pour modifier des paramètres d'étalonnage et en particulier pour modifier la masse volumique du fluide prise en compte dans la table d'étalonnage. Il s'agit par exemple de touches présentes à proximité de l'afficheur 107. Par exemple, une première touche 108 permet de sélectionner un paramètre parmi une pluralité de paramètres qui défilent successivement à chaque pression sur la touche 108. Deux autres touches 109 et 110 permettent alors respectivement d'augmenter et de diminuer le paramètre sélectionné grâce à la touche 108. Une dernière touche 111 permet de redonner aux paramètres ainsi modifiés des valeurs modèles. D'autres touches 112 peuvent servir pour d'autres fonctionnalités, comme des modifications de l'affichage par exemple.

Il est également envisageable, dans une mise en oeuvre très simple, de munir les moyens de traitement de données d'une molette permettant, par exemple, de faire le zéro pour l'étalonnage du dispositif.

Concernant les modifications de masse volumique dues à la température, il est envisageable de munir un dispositif selon l'invention d'un capteur de température fournissant une donnée aux moyens de traitement de données. Ces derniers peuvent alors prendre automatiquement en compte ce changement de température grâce à une programmation spécifique de la fonction de transfert du fluide en fonction de la température.

On constate aussi qu'il est avantageux de munir les moyens de traitement de données d'un moyenneur apte à calculer une moyenne de la vitesse mesurée sur un intervalle de temps donné, cette moyenne étant alors affichée à l'issue dudit intervalle de temps. Un tel moyenneur évite que l'afficheur n'affiche, sur les chiffres de droite de l'afficheur, beaucoup de valeurs différentes dans une durée courte ce qui rendrait la lecture de la vitesse délicate. L'utilisation d'un moyenneur permet donc en particulier de s'affranchir des relevés visuels des affichages, assez imprécis aux plus forts débits à cause de fortes fluctuations de vitesse au sein de l'écoulement dues à la turbulence.

Pratiquement il peut s'agir d'un voltmètre programmable ou d'une carte d'acquisition. L'intervalle de temps durant lequel la moyenne est réalisée peut être variable. Son réglage peut d'ailleurs être offert en paramètre pour réglage par un opérateur du dispositif.

Un tel moyenneur est destiné à fonctionner avec des données numériques ou avec des données analogiques. Dans ce dernier cas, il réalise une intégration de signaux analogiques.

Les moyens de traitement de données 105 peuvent aussi comporter ou être connecté à des moyens pour enregistrer la vitesse du fluide en valeur numérique ou en valeur analogique. Ils peuvent aussi être connectés à un automate de communication, un système de télétransmission ou un asservissement d'équipement. Un tel équipement asservi peut être une vanne ou un dispositif d'injection de produit.

On peut prévoir, dans ce cadre, que les moyens de traitement des données incluent des moyens pour programmer des seuils de valeur de sortie ou des niveaux de consigne pour mettre en place une alarme ou une action pilotée par un relais de commande. Le dispositif pourra notamment être installé sur un déversoir d'orage pour détecter un déversement et le quantifier. Un dispositif selon l'invention peut également équiper une résurgence karstique à moindre coût.

Le dispositif selon l'invention est avantageusement équipé d'un capteur de force numérique réalisant des mesures à des fréquences élevées, par exemple de l'ordre de 50 mesures par secondes, ce qui est le cas du capteur de force en compression donné en exemple de réalisation. Quand un capteur de force analogique est utilisé, on peut soit exploiter en continu les signaux reçu en continu, soit utiliser un convertisseur analogique numérique échantillonnant, par exemple, à une telle fréquence.

Dans les cas où la fréquence est suffisamment élevée (50 mesures par secondes notamment), les temps de réponse du capteur de force et des moyens de traitement de données permettent de mesurer des vitesses instantanées et notamment des efforts lors de phénomènes de coups de béliers ou de houle.

On note que contrairement à d'autres dispositifs connus, comme les micro-moulinets, le dispositif selon l'invention ne comprend pas de pièce en mouvement dans le fluide, ce qui simplifie sa maintenance et augmente sa résistance aux diverses agressions que peut subir un tel dispositif de mesure. A ce sujet, le dispositif selon l'invention peut aisément être réalisé avec de l'acier inoxydable et des matières plastiques. Il résistera ainsi correctement aux principales agressions chimiques des liquides dont on veut mesurer la vitesse d'écoulement. Le dispositif selon l'invention pourra en particulier être installé dans de l'eau salée.

En outre, son fonctionnement étant indépendant de la turbidité ou de la conductivité du fluide dont on mesure la vitesse d'écoulement, un dispositif selon l'invention réalise une mesure indépendante de la qualité de ce fluide. Il présente ainsi des caractéristiques avantageuses en comparaison avec, notamment, les mesures doppler ou les méthodes électromagnétiques.

Pour fonctionner correctement, le dispositif selon l'invention doit être orienté de manière à ce que la direction d'écoulement soit sensiblement parallèle à la direction de compression. Aussi, on peut munir le dispositif selon l'invention de moyens d'orientation pour orienter dans le sens du courant le support rigide sur lequel sont fixés le capteur et l'objet d'impact. Il s'agit, par exemple, de pales fixées au support rigide et qui placent la direction de compression parallèlement au sens du courant avec l'aide de celui-ci. Dans ce cas le support rigide est monté mobile en rotation autour d'un axe qui sera maintenu perpendiculaire à la surface de l'écoulement lors de son utilisation. Une telle réalisation est utile quand on souhaite mesurer la vitesse d'un fluide dans un écoulement dont on ne connaît pas le sens ou la direction d'écoulement.

En pratique le support rigide peut être un tube longiligne portant, outre les éléments de l'invention, des moyens, par exemple des pales, pour orienter ledit support rigide dans la direction et le sens de l'écoulement. Le tube est emmanché sur une tige autour de laquelle il est mobile en rotation. Avantageusement la tige porte les moyens de traitement de données. Il est également possible de prévoir que le support rigide soit monté en rotation à une extrémité d'une tige rigide faisant office d'axe rigide de rotation.

Ainsi, dans le cas où le dispositif selon l'invention est placé dans un écoulement stable, en charge ou non, dans un espace suffisamment large pour ne pas créer de perturbation due aux effets de bord, il fournit une solution économique pour mesurer la vitesse d'un écoulement.

Outre les modes de réalisation illustratifs présentés, on remarque enfin que des mises en oeuvre diverses peuvent être réalisées selon les principes de l'invention définis dans les revendications suivantes.

En particulier on note qu'il est possible d'utiliser un objet d'impact en portion de sphère ou sphérique sur laquelle il est avantageux d'avoir indiqué la direction de compression. On rappelle aussi que l'utilisation d'une sphère ou portion de sphère en objet d'impact peut se révéler avantageuse, du fait de son faible coefficient de traînée, pour mesurer de grandes vitesses d'écoulement du fluide. On note enfin que les moyens de traitement peuvent être en partie ou entièrement intégrée à un capteur de force en compression. Au sujet des applications, il est envisageable d'utiliser un dispositif selon l'invention pour réaliser un débitmètre ou encore un compteur d'eau dans une manchette.

## Revendications

1. Dispositif [100] destiné à la mesure de la vitesse d'un fluide [300] dans un écoulement, comprenant:

   - un support rigide [101],
   - un capteur de force en compression [102] étanche rigidement fixé à une extrémité dite d'immersion [101'] dudit support rigide [101] et apte à capter une force dans au moins une direction de compression [D], à transformer cette force en signaux électriques dépendants de cette force et à envoyer ces signaux électriques vers des moyens de traitement de données [106],
   - un objet dit d'impact [104] fixé rigidement sur le capteur de force en compression [102] de telle manière que la force captée par le capteur de force en compression [102] est la force exercée sur l'objet d'impact [104] dans la direction de compression [D], ledit objet d'impact [104] s'étendant sur une surface fixe par rapport à la direction de compression [D] du capteur de force en compression [102],
   - des moyens de traitement de données [106] destinés à recevoir les signaux électriques et à en déduire la vitesse du fluide [300] dans la direction de compression [D] à partir desdits signaux électriques.

2. Dispositif [100] selon la revendication 1, **caractérisé en ce que** l'objet d'impact [104] est un élément plan fixé perpendiculairement à la direction de compression [D].

3. Dispositif [100] selon l'une des revendications 1 et 2, **caractérisé en ce que** l'objet d'impact [104] est un disque ou une sphère ou une portion de sphère.

4. Dispositif [100] selon l'une des revendications 1 à 3, **caractérisé en ce qu'**il est apte à être équipé d'objets d'impact [104] démontables de tailles variées et/ou de formes variées correspondant à différentes plages optimales de mesures du dispositif [100].

5. Dispositif [100] selon l'une des revendications 1 à 4, **caractérisé en ce que** le support rigide [101] étant longitudinal, les moyens de traitement de données [106] sont fixés à l'autre extrémité [101"] du support rigide [102].

6. Dispositif [100] selon l'une des revendications 1 à 5, **caractérisé en ce que** les moyens de traitement de données [106] incluent des moyens pour calculer une moyenne des signaux reçus sur des périodes de durée prédéterminée.

7. Dispositif [100] selon l'une des revendications 1 à 6, **caractérisé en ce que** les moyens de traitement de données [106] incluent des moyens de paramétrage du dispositif [100].

8. Dispositif [100] selon l'une des revendications précédentes, **caractérisé en ce que** les moyens de traitement de données [106] incluent des moyens pour prendre en compte la température ambiante d'utilisation du dispositif [100].

9. Dispositif [100] selon l'une des revendications précédentes **caractérisé en ce que** le support rigide [101] est monté mobile en rotation sur un axe rigide destiné à être sensiblement perpendiculaire à la surface de l'écoulement lors de l'utilisation et **en ce qu'**il comporte des moyens pour orienter ledit support rigide [101] dans le sens [A] de l'écoulement.

10. Procédé de mesure de la vitesse d'un fluide [300] dans un écoulement incluant les étapes de :

    - immerger un capteur de force en compression [102] étanche rigidement fixé à une extrémité dite d'immersion [101'] d'un support rigide, ledit capteur [102] étant apte à capter une force dans au moins une direction de compression [D], un objet dit d'impact [104] étant placé rigidement sur le capteur de force en compression [102] de telle manière que la force captée par le capteur de force en compression [102] est la force exercée sur l'objet d'impact [104] dans la direction de compression [D], ledit objet d'impact [104] s'étendant sur une surface fixe par rapport à la direction de compression [D] du capteur de force en compression [102], l'immersion étant telle que la direction de déplacement [A] du fluide [300] soit sensiblement parallèle à ladite direction de compression [D],
    - transformer, au sein du capteur de force en compression [102], cette force en signaux électriques dépendants de cette force,
    - envoyer ces signaux électriques vers des moyens de traitement de données [106],
    - déduire, au sein des moyens de traitement de données [106], la vitesse du fluide [300] dans la direction de compression [D],
    - enregistrer ou afficher ladite vitesse.

FIG.1

FIG.2

FIG.3

# FIG.4

MVV (m/s)

# FIG.5

MVV (m/s)

FIG.6

**Office européen**

**des brevets**

**RAPPORT DE RECHERCHE EUROPEENNE**

Numéro de la demande

EP 06 29 1920

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 3 881 354 A (BLOCK ET AL) 6 mai 1975 (1975-05-06) * colonne 3, ligne 3 - ligne 23; figures 2,6 * ----- | 1-10 | INV. G01P5/02 G01F1/28 |
| X | GB 03394 A A.D. 1910 (JOHN WILFRID SEDDON) 9 février 1911 (1911-02-09) * page 1, ligne 9 - ligne 22; figure 3 * ----- | 1-10 | |
| A,D | FR 2 565 351 A (CERCLE LOIC) 6 décembre 1985 (1985-12-06) * le document en entier * ----- | 1-10 | |
| A | US 1 819 155 A (FALES ELISHA N) 18 août 1931 (1931-08-18) * le document en entier * ----- | 1-10 | |
| A | US 3 929 015 A (GREENE ET AL) 30 décembre 1975 (1975-12-30) * le document en entier * ----- | 1-10 | |
| A | US H1 688 H (LAKE ET AL) 4 novembre 1997 (1997-11-04) * le document en entier * ----- | 1-10 | DOMAINES TECHNIQUES RECHERCHES (IPC) G01P G01F |

Le présent rapport a été établi pour toutes les revendications

| Lieu de la recherche | Date d'achèvement de la recherche | Examinateur |
|---|---|---|
| La Haye | 14 mars 2007 | Gagin, Thibaut |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 29 1920

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-03-2007

| Document brevet cité au rapport de recherche | | | Date de publication | Membre(s) de la famille de brevet(s) | Date de publication |
|---|---|---|---|---|---|
| US 3881354 | A | | 06-05-1975 | AUCUN | |
| GB 191003394 | A | | 09-02-1911 | AUCUN | |
| FR 2565351 | A | | 06-12-1985 | AUCUN | |
| US 1819155 | A | | 18-08-1931 | AUCUN | |
| US 3929015 | A | | 30-12-1975 | AUCUN | |
| US H1688 | H | | 04-11-1997 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2565351